# EUROPÄISCHE PATENTSCHRIFT

(11) **EP 2 100 756 B1**
(45) Veröffentlichungstag und Bekanntmachung des Hinweises auf die Patenterteilung: **01.12.2010**
(21) Anmeldenummer: 09002641.0
(22) Anmeldetag: 25.02.2009
(51) Int. Cl.: B60C 25/132, G01J 5/00

(54) **Vorrichtung und Verfahren zur Temperaturmessung an Fahrzeug-Luftreifen**
Device and method for measuring temperature of pneumatic vehicle tyres
Dispositif et procédé de mesure des températures sur des pneus de véhicules

(30) Priorität: 12.03.2008 DE 102008013920
(43) Veröffentlichungstag der Anmeldung: 16.09.2009
(73) Patentinhaber: Snap-on Equipment GmbH, 64319 Pfungstadt (DE)
(72) Erfinder: Ewert, Ralf, 55469 Bergenhausen (DE)
(74) Vertreter: Eisenführ, Speiser & Partner

(56) Entgegenhaltungen:
- EP-A- 1 637 851
- WO-A-01/03953
- WO-A-2005/012859
- WO-A-2005/035276
- DE-A1- 3 904 122
- US-A1- 2005 117 624

## Beschreibung

Die vorliegende Erfindung befasst sich mit einer Vorrichtung zur Temperaturmessung an Fahrzeug-Luftreifen.

Temperaturmessung am Luftreifen für Kraftfahrzeuge ist im Stand der Technik bisher nur in Einzelfällen im Zusammenhang mit der Kontrolle des Reifens während der Fahrt bekannt. So ist beispielsweise aus der DE 37 05 617 A1 ein Verfahren zur Temperaturmessung im Inneren des Gummikörpers von Luftreifen für Kraftfahrzeuge bekannt. Die Temperaturmessung erfolgt dort durch eingelegte Metalllitzen welche von einer äußeren Messeinrichtung zur Temperaturbestimmung abgetastet werden können. Dies dient genau wie die regelmäßige Reifendrucküberwachung bei einem fahrenden Kraftfahrzeug zur Erhöhung der Verkehrssicherheit.

Auch die DE 698 17 225 T2 schlägt ein Verfahren und einen Apparat zum Messen der Temperatur mit einer integrierten Schaltungsanordnung vor. Auch diese Messung kann nur erfolgen durch den Einsatz eines im Reifen integrierten Temperatursensors und das Abtasten dieses Sensors durch ein externes Messgerät.

Aus der DE 3 904 122 A1 ist ferner eine Anordnung zur Oberflächentemperaturmessung von Automobilreifen mittels einer Infrarot-Meßeinrichtung bekannt.

Aufgabe der vorliegenden Erfindung ist es, eine Vorrichtung und ein Verfahren zur Temperaturmessung an Reifen zur weiteren Verbesserung der Verkehrssicherheit unter Vermeidung von Reifenschäden zu schaffen.

Diese Aufgaben werden durch eine Vorrichtung bzw. ein Verfahren mit den Merkmalen gemäß Patentanspruch 1 bzw. Patentanspruch 13 gelöst.

Eine erfindungsgemäße Vorrichtung zur Temperaturmessung ist zum Einsatz bei Reifenmontiermaschinen ausgebildet und weist mindestens einen Temperaturfühler zur Erfassung von Reifenkerntemperaturen auf. Dieser Temperaturfühler ist derart platzierbar, dass die Kerntemperatur des Reifens vor dem Montagevorgang beim Montieren des Reifens auf die Radfelge oder Demontieren des Reifens von der Radfelge gemessen wird. Darüberhinaus weist die Vorrichtung eine Anzeigeeinrichtung für die gemessene Temperatur auf. Bei modernen Reifen ist die Reifenkerntemperatur ein wesentlicher Parameter für eine Reifen-schonende Montage. Insbesondere bei sogenannten Runflat-Reifen (Reifen mit Notlaufeigenschaften bis 80 km/h) und UHP-Reifen (Ultra High Performance-Reifen, insbesondere für hohe Geschwindigkeiten) kann die Missachtung der Reifenkerntemperatur zur Beschädigung oder Zerstörung des Reifenmaterials bei der Montage führen. Derartige Reifen sind oftmals mit einem verstärkten Wulst und einer steiferen Seitenwand ausgestattet, um die Stabilität des Reifens, beispielsweise bei fehlendem Innendruck oder extrem hohen Geschwindigkeiten zu verbessern.

Die Kautschukmischungen, welche für Autoreifen verwendet werden, weisen üblicherweise einerseits eine sehr schlechte Wärmeleitfähigkeit, andererseits eine hohe Abhängigkeit der Elastizität von der Temperatur auf. Das bedeutet, dass die Reifen bei niedriger Reifenkerntemperatur eine niedrige Elastizität aufweisen. Beim Montagevorgang eines Reifens auf der Felge muss der Reifen, insbesondere der Wulst des Reifens über den Außendurchmesser der Felge gedehnt werden, um in seinen endgültigen Sitz hinter dem Felgenhorn zu gelangen. Diese Dehnung ist umso leichter, je elastischer der Reifen, d.h. je höher die Reifenkerntemperatur ist. Beim Demontiervorgang wird der Wulst in umgekehrter Richtung über das Felgenhorn bewegt.

Bei umfangreichen Versuchsreihen hat sich herausgestellt, dass bei zu niedriger Reifenkerntemperatur durch die Dehnung des Reifens beim Montagevorgang irreparable Schäden an der Seitenwand und am Reifenwulst entstehen. Besonders gefährlich ist dies, wenn die Schäden nur innerhalb des Kautschukmaterials und damit an einer nicht sichtbaren Stelle entstehen. Auch Verletzungen des Materials, welche sich nach dem Montagevorgang verdeckt hinter dem Felgenhorn befinden, stellen eine große Gefahr dar. Bei derartiger Beschädigung des Reifenmaterials ist die Qualität des Reifens stark beeinträchtigt. So kann beispielsweise der Reifen langsam Luft verlieren oder unter Umständen sogar bei hohem Innendruck oder hoher Geschwindigkeit schlagartig platzen. Die Messung der Reifenkerntemperatur vor dem Montage bzw. Demontagevorgang ist somit ein wesentlicher Bestandteil, um die Verkehrssicherheit des Fahrzeugs sicherzustellen, an welchem die montierten Fahrzeugräder später angebracht werden. Bei horizontal angeordneter Radfelge während des Montage- bzw. Demontagevorgangs erfolgt die Temperaturmessung vorzugsweise an der oben liegenden Reifenwand und/oder am oben liegenden Reifenwulst.

Das Risiko eines unsicheren Rades nach dem Montagevorgang wird noch erhöht durch die Tatsache, dass Reifen für die Montage auf der Felge üblicherweise offen in Werkstätten auf dem Boden gelagert werden. Die Raumtemperaturen liegen dabei oftmals deutlich unter 20° und die Reifen sind durch ihre bodennahe Lagerung entsprechend kälter.

Unter Reifenkerntemperatur wird die Innentemperatur des Reifenmaterials verstanden. In dieser Anmeldung ist die Reifenkerntemperatur insbesondere die Innentemperatur des Materials der Reifenseitenwände und des Wulstes. Die Oberflächentemperatur des Reifens ist aufgrund der schlechten Wärmeleitfunktion des Kautschukmaterials kein Maß für die Reifenkerntemperatur.

Von Vorteil kann es sein, die Vorrichtung Messung der Reifenkerntemperatur auch während des Montagevorgangs zu verwenden. So kann sichergestellt werden, dass auch Temperaturänderungen sich nicht nachteilig auf den Montagevorgang auswirken können.

Weiterhin ist von Vorteil, wenn der erfindungsgemäße Temperaturfühler die Kerntemperatur des Reifens berührungslos misst. Besonderes vorteilhaft ist die Ausgestaltung des berührungslosen Temperaturfühlers in Form eines Infrarotthermometers. Die berührungslose Messung der Reifenkerntemperatur verhindert eine unnötige Beeinträchtigung oder sogar Beschädigung des Reifenmaterials. Darüberhinaus findet die Messung durch ihre Berührungslosigkeit verschleißfrei statt. Auch die Bewegung des Reifens während des Montagevorgangs stellt für diese Temperaturmessung kein Problem dar.

Um bei einer erfindungsgemäßen Vorrichtung berührungslos die Kerntemperatur zu messen, gibt es verschiedene Möglichkeiten. Da die direkte Kontakttemperatur aufgrund der schlechten Wärmeleitfähigkeit des Reifenmaterials keine Maßgabe für die Reifenkerntemperatur darstellt, ist es vorteilhaft die relevante Reifenkerntemperatur anhand der vom Reifen ausgehenden Wärmestrahlung festzustellen.

Zur berührungslosen Messung der Reifenkerntemperatur im Rahmen der vorliegenden Erfindung ist der Einsatz eines Strahlungsthermometers, beispielsweise eines Pyrometers möglich. Das Strahlungsthermometer, welches einen Infrarotsensor aufweisen kann, erfasst eine vom Reifen emitierte Infrarotstrahlung, deren Wellenlänge von der Reifenkerntemperatur abhängt. Diese Strahlung wird erfasst und ausgewertet. Vorzugsweise wird ein Strahlungsthermometer eingesetzt, dessen Wellenlänge im Mittleren Infrarotbereich (MIR) liegt. Ein großer Vorteil des Einsatzes von derartigen Strahlungsthermometern ist die sehr schnelle Messung (Messgeschwindigkeit < 1 ms bis zu 10 µm je nach Gerät).

Ebenfalls denkbar ist der Einsatz von Thermographie zur berührungslosen Reifenkerntemperaturbestimmung. Die Thermographie hat gegenüber den beiden voranstehenden genannten Methoden den Vorteil, dass sie mehrdimensionale Informationen über die Temperatur des Reifens bietet. Mit einer einzigen Messung kann der gesamte Reifen auf seine Reifenkerntemperatur hin untersucht werden. Temperaturunterschiede im Reifen, beispielsweise hervorgerufen durch die Lagerung des Reifens an der Wand, wodurch eine Hälfte des Reifens deutlich kälter als die andere sein kann, können mittels einer Thermographiekamera aufgedeckt werden, bevor der Montagevorgang beginnt. Es können beispielsweise Kameras im Wellenbereich von 8 bis 14 µm eingesetzt werden.

Alternativ ist im Rahmen der vorliegenden Erfindung auch eine die Reifenoberfläche berührende Messung der Kerntemperatur durch den Temperaturfühler möglich. Bei der berührenden Messung ist jedoch sicherzustellen, dass eine Verletzung des Reifenmaterials vermieden wird.

Im Rahmen der vorliegenden Erfindung kann die Vorrichtung zur Temperaturmessung vorteilhafter Weise mit einer Fixierung an der Maschine gegebenenfalls beweglich befestigt sein und der Temperaturfühler im Wesentlichen auf den zu messenden Reifenbereich ausgerichtet werden. Durch eine lösbare Fixierung wird sichergestellt, dass die Serviceperson die Vorrichtung zur Temperaturmessung bei der Montage zur Hand hat und diese durch die Ausrichtung auf den zu messenden Reifen sofort einsetzbar ist.

Die Messdaten können vorteilhafterweise zumindest optisch, beispielsweise über ein Display angezeigt werden. Auf diesem Display kann die Serviceperson die aktuelle Reifenkerntemperatur ablesen und anhand dieser abgelesenen Messdaten entscheiden, ob und in welcher Form er den Montagevorgang durchführen wird. Die Anzeigeeinrichtung kann an der den Temperaturfühler aufweisenden Messeinrichtung oder an einer geeigneten Stelle an der Reifenmontiermaschine vorgesehen sein.

Die Messdaten können auch vorzugsweise in die Steuereinrichtung der Reifenmontiermaschine eingegeben werden, so dass die Reifenmontiermaschine den Montageprozess beispielsweise nur starten kann, wenn eine gemessene Reifenkerntemperatur vorliegt, die oberhalb eines definierten Sollwertes und insbesondere in einem bestimmten Temperaturbereich liegt. Die Kopplung der Messdaten mit der Maschinensteuerung kann elektronisch erfolgen und schließt somit die Gefahr menschlichen Versagens aus.

Der Sollwert der Kerntemperatur für die Montage oder Demontage der Reifen und insbesondere von Runflat-Reifen und UHP-Reifen liegt in einem Mindesttemperaturband von 15°C bis 20°C und darf 15°C nicht unterschreiten. Diese Mindestwerte für die Reifenkerntemperatur sind für eine beschädigungsfreie Montage des Reifens erforderlich.

Desweiteren kann es vorteilhaft sein, in Temperaturbereichen der Reifenkerntemperatur, die nahe dem Sollwert liegen, zusätzliche Sicherheitsmaßnahmen vorzusehen. Beispielsweise kann vor der Montage der Reifenwulst mit Schmiermittel behandelt werden, so dass sich während des Montagevorgangs keine unnötig großen Spannungen aufbauen können. Die Montage wird somit erleichtert und die entstehende Spannung im Reifenmaterial auf das notwendigste begrenzt. Der Bereich in welchem diese Sicherheitsmaßnahme einzusetzen ist liegt vorzugsweise im Bereich von 2°C über der Solltemperatur.

Da es nicht immer möglich ist abzuwarten bis die Reifen sich auf die entsprechende Solltemperatur des Reifenkerns erwärmt haben oder diese Erwärmung aufgrund niedriger Raumtemperaturen grundsätzlich gar nicht möglich wäre, kann es sinnvoll sein bei der vorliegenden Erfindung zusätzlich mindestens eine Heizeinrichtung vorzusehen, welche in der Lage ist die Kerntemperatur des Reifens zu erhöhen. Ausschlaggebend ist hierbei, dass die Heiztemperatur bevorzugt 50°C nicht überschreitet. So kann bei der Messung eines Reifenkerntemperaturwertes unterhalb der Solltemperatur der zu montierende Reifen auf der Reifenmontiermaschine eingespannt bleiben und dort in relativ kurzer Zeit auf eine Reifenkerntemperatur erwärmt werden, welche die Montage erlaubt. Durch den Einsatz von Umluft- oder Warmluftgebläsen ist die Trocknung von eventuell sich bildendem Schwitzwasser bei der Erwärmung von kalten Reifen von Vorteil.

Die Erwärmung kann mit Wasser erfolgen, wobei die relativ hohe Wärmekapazität des Wassers ausgenützt wird.

Vorteilhafterweise kann eine Zielhilfe vorgesehen sein, welche die richtige Richtung der Messung erleichtert. Beispielsweise mit einem Laser kann der zu erfassende Messbereich anvisiert werden. Vorzugsweise erfolgt die Temperaturmessung am Wulst und/oder an der Seitenwand des Reifens. Dabei wird insbesondere die Kerntemperatur des Reifenwulstes und/oder der Reifenseitenwand gemessen, welche vom Montier- bzw. Demontierwerkzeug erfasst werden.

Ein weiterer Gegenstand der vorliegenden Erfindung ist eine Reifenmontiermaschine, welche mindestens eine Vorrichtung zur Temperaturmessung mit mindestens einem Temperaturfühler für die Reifenkerntemperatur und mindestens eine Anzeigeeinrichtung für die gemessene Temperatur aufweist.

Ebenfalls Gegenstand der Erfindung ist ein Verfahren zur Montage und auch Demontage von einem Reifen auf einer Felge, wobei in einem ersten Schritt nach dem Anordnen der Felge und des Reifens auf der Reifenmontiermaschine die Reifenkerntemperatur mit einer erfindungsgemäßen Vorrichtung zur Temperaturmessung bestimmt wird. Als nächstes wird der gemessene Kerntemperaturwert mit einer Solltemperatur verglichen. Der Montagevorgang wird nur gestartet, wenn die gemessene Ist-Temperatur über dieser Solltemperatur liegt. Die Solltemperatur für ein derartiges erfindungsgemäßes Verfahren liegt zwischen 12°C und 19°C, vorzugsweise im Bereich zwischen 14°C und 16°C, und besonders bevorzugt bei genau 15°C.

Die vorliegende erfindungsgemäße Vorrichtung zur Temperaturmessung wird insbesondere für die Montage von sogenannten Runflat-Reifen oder UHP-Reifen verwendet.

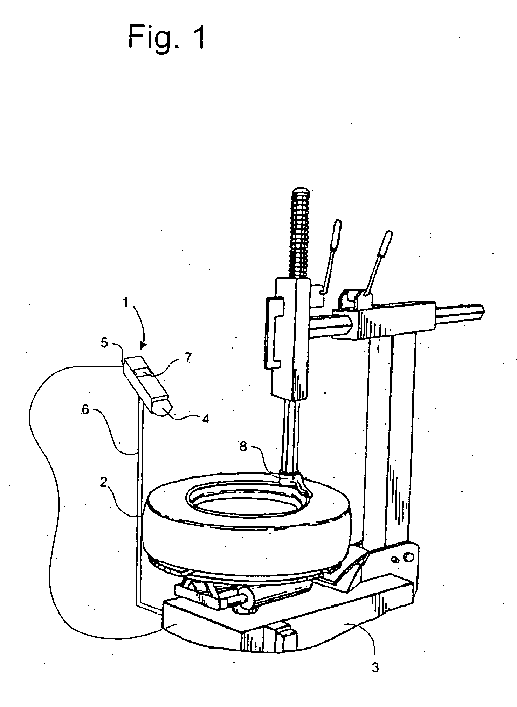

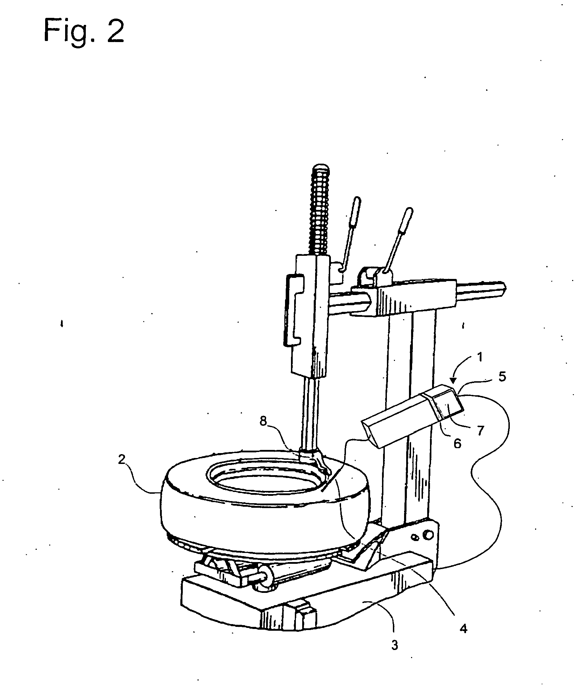

Der Gegenstand der Anmeldung wird näher erläutert anhand der Figuren 1 und 2:
- Fig. 1: zeigt ein erstes Ausführungsbeispiel einer erfindungsgemäßen Vorrich- tung; und
- Fig. 2: zeigt ein zweites Ausführungsbeispiel einer erfindungsgemäßen Vorrich- tung zur Temperaturmessung.

Die Fig. 1 und 2 zeigen Ausführungsbeispiele von erfindungsgemäßen Temperaturmessvorrichtungen 1. Diese Temperaturmessvorrichtungen werden in Verbindung mit einer Reifenmontiermaschine 3, welche in den Figuren schematisch dargestellt ist, zum Einsatz gebracht. Die Temperaturmesseinrichtungen 1 beinhalten einen Temperaturfühler 4, welcher berührend mit der Oberfläche eines Luftreifens 2 oder die Oberfläche nicht berührend in der Nähe der Oberfläche zur Erfassung der Kerntemperatur des Reifens angeordnet werden können. Wie aus den Figuren zu ersehen ist, wird vorzugsweise die Kerntemperatur der Reifenseitenwand und/oder des Reifenwulstes mit Hilfe des Temperaturfühlers 4 gemessen, welche von einem Montier- bzw. Demontierwerkzeug 8 der Reifenmontiermaschine 3 beim Montier- bzw. Demontiervorgang erfasst wird. Bei den dargestellten Ausführungsbeispielen handelt es sich um die oben liegende Reifenseitenwand bzw. den oben liegenden Reifenwulst.

Die Temperaturmessvorrichtung 1 beinhaltet ferner eine Anzeigeeinrichtung, beispielsweise in Form eines Displays 7, mit welchem die gemessene Temperatur des Reifens 2 angezeigt wird. Dies kann beispielsweise in digitaler Form erfolgen. Hierzu kann der Temperaturfühler 4 einen Messwandler beinhalten, welcher die gemessene Temperatur in ein elektrisches Signal wandelt. Mit Hilfe einer Auswerteschaltung werden die elektrischen Messsignale für die Anzeige am Display 7, beispielsweise durch Digitalisierung aufbereitet.

Zusätzlich können die Messdaten per Funk oder mit Hilfe eines Kabels von einem Signalausgang 5 an eine Steuereinrichtung der Reifenmontiermaschine 3 weitergeleitet werden. Hierdurch kann gewährleistet werden, dass der Montagevorgang nur dann in Gang gesetzt wird, wenn die gemessene Kerntemperatur des Reifens am Wulst und/oder an der Reifenseitenwand an der vom Montier- bzw. Demontierwerkzeug 8 erfassten Reifenseite die vorgeschriebene Temperatur (Solltemperatur) aufweist. Wie im einzelnen schon erläutert, ist der Temperaturfühler 4 vorzugsweise als Infrarotsensor ausgebildet.

Wie aus Fig. 1 zu ersehen ist, kann die Temperaturmessvorrichtung 1 in Form eines Handgerätes von der Serviceperson von Hand an die zu messenden Bereiche des Reifens 2 herangeführt werden. Hierzu kann die Temperaturmessvorrichtung lösbar an einem Teil des Maschinenrahmens bei Nichtgebrauch befestigt werden. Ferner ist es möglich, die Temperaturmessvorrichtung beweglich mittels einer Halterung am Maschinenrahmen zu lagern. Durch die bewegliche Halterung ist es möglich, den Temperaturfühler 4 mit seiner Messrichtung auf den zu messenden Bereich des Reifens 2, beispielsweise den vom Montier- bzw. Demontierwerkzeug 8 erfassten Reifenwulst oder die vom Montier- bzw. Demontierwerkzeug 8 erfasste Reifenseitenwand zu richten. Hierzu kann an der Temperaturmesseinrichtung 1 eine Ausrichtvorrichtung, beispielsweise in Form eines Laserpointers vorgesehen sein, mit welchem das Ausrichten der Messrichtung auf die gewünschte Reifenoberfläche erleichtert wird.

Beim Ausführungsbeispiel der Fig. 2 ist der Temperaturfühler 4 beweglich am Gehäuse der Temperaturmessvorrichtung 1 vorgesehen und kann beispielsweise berührend auf die Oberfläche am zu messenden Reifenbereich gebracht werden. Der Temperaturfühler 4 kann mittels eines Kabels mit der Auswerteschaltung in der Temperaturmessvorrichtung 1 verbunden sein.

Durch das Einschalten der Reifenmontiermaschine 3 kann gleichzeitig die kontinuierliche Messung der Reifenkerntemperatur mittels des als Infrarottemperaturmessgerät ausgebildeten Temperaturfühlers 4 ausgeführt werden. Über den elektrische Signalausgang 5 gelangt der in Echtzeit gemessene Wert für die Reifenkerntemperatur des Reifens 2 an die in der Reifenmontiermaschine 3 enthaltende Steuerlogik (Steuereinrichtung), welche den aktuellen Reifenkerntemperaturwert mit der gespeicherten Solltemperatur von 15 °C vergleicht. Liegt die Messtemperatur an oder oberhalb dieser Marke, gibt die Steuerlogik der Reifenmontiermaschine den Reifen 2 zur Montage frei und kann dies auf dem Display 7 anzeigen. Der Benutzer der Reifenmontiermaschine 3 startet die Montage oder die Maschine startet automatisch den Montagevorgang.

Ein Demontagevorgang kann entsprechend durchgeführt werden.

### Bezugszeichenliste:

- 1: Vorrichtung zur Temperaturmessung
- 2: Luftreifen
- 3: Reifenmontiermaschine
- 4: Temperaturfühler
- 5: Signalausgang
- 6: Halterung
- 7: Anzeigevorrichtung
- 8: Montier-/ Demontierwerkzeug

## Patentansprüche

1. Reifenmontiermaschine aufweisend mindestens eine Vorrichtung zur Temperaturmessung an Fahrzeug-Luftreifen mit einer Temperaturmesseinrichtung (1), welche mindestens einen Temperaturfühler (4) für Reifenkerntemperaturen aufweist, welcher derart platzierbar ist, dass die Kerntemperatur des Reifens (2) vor dem Montagevorgang ermittelt wird, und mit mindestens einer Anzeigeeinrichtung (7) für die ermittelte Temperatur.

2. Reifenmontiermaschine nach Anspruch 1,
**dadurch gekennzeichnet, dass** die Vorrichtung zur Temperaturmessung zur Ermittlung der Kerntemperatur auch während des Montagevorgangs geeignet ist.

3. Reifenmontiermaschine nach Anspruch 1 oder 2,
**dadurch gekennzeichnet, dass** der Temperaturfühler (4) ausgebildet ist berührungslos oder die Reifenoberfläche berührend zu messen.

4. Reifenmontiermaschine nach einem der vorherigen Ansprüche,
**dadurch gekennzeichnet, dass** der Temperaturfühler (4) als Infrarotsensor ausgebildet ist und im mittleren Infrarotbereich empfindlich ist.

5. Reifenmontiermaschine nach einem der vorherigen Ansprüche,
**dadurch gekennzeichnet, dass** die Vorrichtung zur Temperaturmessung als von Hand betätigbares Gerät ausgebildet ist.

6. Reifenmontiermaschine nach einem der vorherigen Ansprüche,
**dadurch gekennzeichnet, dass** der Temperaturfühler (4) auf den Wulst und/oder die Reifenseitenwand, an welchem bzw. an welcher das Montier- bzw. Demontierwerkzeug (8) der Reifenmontiermaschine angreift, ausrichtbar ist.

7. Reifenmontiermaschine nach Anspruch 6,
**dadurch gekennzeichnet, dass** zumindest der Temperaturfühler (4) am Maschinenrahmen beweglich gelagert ist.

8. Reifenmontiermaschine nach einem der Ansprüche 1 bis 7,
**dadurch gekennzeichnet, dass** der Temperaturfühler (4) und die Anzeigeeinrichtung (7) eine Baueinheit bilden.

9. Reifenmontiermaschine nach einem der vorherigen Ansprüche,
**dadurch gekennzeichnet, dass** die Reifenmontiermaschine (3) den Montageprozess nur starten kann, wenn ihr eine ermittelte Reifenkerntemperatur vorliegt, die oberhalb eines definierten Sollwertes liegt, wobei der Sollwert mindestens 15°C beträgt.

10. Reifenmontiermaschine nach einem der vorherigen Ansprüche,
**dadurch gekennzeichnet, dass** mindestens eine Heizeinrichtung vorgesehen ist, um die Kerntemperatur des Reifens (2) zu erhöhen, wenn die gemessene Temperatur unterhalb einer Solltemperatur liegt, wobei die Heiztemperatur höchstens 50°C beträgt.

11. Reifenmontiermaschine nach Anspruch 10,
**dadurch gekennzeichnet, dass** die Heizeinrichtung Wasser als Wärmeübertragungsmedium aufweist.

12. Reifenmontiermaschine nach einem der vorherigen Ansprüche,
**dadurch gekennzeichnet, dass** eine die Messrichtung des Temperaturfühlers (4) angebende Ausrichteinrichtung vorgesehen ist, wobei die Ausrichteinrichtung mit der Messeinrichtung (1) verbunden ist und einen Laser aufweist.

13. Verfahren zur Montage eines Luftreifens, bei dem der Luftreifen beim Montagevorgang auf eine Radfelge aufgezogen oder von einer Radfelge entfernt wird mit den weiteren Schritten:
a. Verwenden einer Reifenmontiermaschine nach einem der Ansprüche 1 bis 12 mit einer Vorrichtung zur Temperaturmessung,
b. Ermitteln der Reifenkerntemperatur mit der Vorrichtung zur Temperaturmessung,
c. Vergleichen der ermittelten Ist-Temperatur mit einer Solltemperatur,
d. Start des Montagevorgangs, wenn die Ist-Temperatur gleich der Soll-Temperatur ist oder über der Soll- Temperatur liegt.

14. Verwendung einer Reifenmontiermaschine mit einer Vorrichtung zur Temperaturmessung nach einem der Ansprüche 1 bis 12 oder eines Verfahrens nach Anspruch 13 für die Montage von Runflatreifen oder UHP-Reifen.

## Claims

1. A tire fitting apparatus having at least one device for temperature measuring at pneumatic vehicle tires, comprising a temperature detecting device (1) having at least one temperature sensor (4) for tire core temperatures able to be positioned such that the core temperature of a tire (2) is determined before the fitting operation, and at least one display device (7) for the determined temperature.

2. The tire fitting apparatus according to claim 1,
**characterized in that** the temperature measuring device is able to determine the core temperature also during the fitting operation.

3. The tire fitting apparatus according to claim 1 or 2,
**characterized in that** the temperature sensor (4) is adapted to detect in a contactless manner or with contact to the tire surface.

4. The tire fitting apparatus according to any one of the preceding claims,
**characterized in that** the temperature sensor (4) is designed as a infrared sensor and is operating in the medium infrared range.

5. The tire fitting apparatus according to any one of the preceding claims,
**characterized in that** the temperature measuring device is designed as a manually operable unit.

6. The tire fitting apparatus according to any one of the preceding claims,
**characterized in that** the temperature sensor (4) is able to be directed to the bead and/or the sidewall of a tire which are engaged by the fitting or removing tool (8) of the tire fitting apparatus.

7. The tire fitting apparatus according to claim 6,
**characterized in that** at least the temperature sensor (4) is movably supported at the apparatus frame.

8. The tire fitting apparatus according to any one of the claims 1 to 7,
**characterized in that** the temperature sensor (4) and the display device (7) form a physical unit.

9. The tire fitting apparatus according to any one of the preceding claims,
**characterized in that** the tire fitting apparatus (3) is able to start the fitting operation only if a determined tire core temperature is above a defined target value, wherein the target value is not less than 15 °C.

10. The tire fitting apparatus according to any one of the preceding claims,
**characterized in that** at least one heating device is provided to increase the tire core temperature if the detected temperature is below a target value, wherein the heating temperature does not exceed 50 °C.

11. The tire fitting apparatus according to claim 10,
**characterized in that** the heating device comprises water as a heat transfer medium.

12. The tire fitting apparatus according to any one of the preceding claims,
**characterized in that** an adjusting means is provided to determine the detecting direction of the temperature sensor (4), wherein the adjusting means is coupled to the detecting device (1) and comprises a laser.

13. A method for fitting a pneumatic tire, wherein during the fitting operation the pneumatic tire is fitted onto a wheel rim or removed from a wheel rim, further comprising the steps of:
a. using a tire fitting apparatus according to any one of the claims 1 to 12 having a device for temperature measuring,
b. determining the tire core temperature by means of the temperature measuring device,
c. comparing the determined actual temperature to a target temperature,
d. starting the fitting operation if the actual temperature is equal to the target temperature or higher than the target temperature.

14. Usage of a tire fitting apparatus having a device for temperature measuring according to any one of the claims 1 to 12 or according to a method of claim 13 for fitting run flat tires or UHP tires.

## Revendications

1. Machine de montage de pneumatique comportant au moins un dispositif de mesure de la température de pneumatiques de véhicule par un dispositif (1) de mesure de la température, qui comporte au moins une sonde (4) de température pour les températures du coeur du pneumatique, sonde qui peut être placée de manière à déterminer la température du coeur du pneumatique (2) avant l'opération de montage, et comprenant au moins un dispositif (7) d'indication de la température déterminée.

2. Machine de montage de pneumatique suivant la revendication 1,
**caractérisée en ce que** le dispositif de mesure de la température est approprié pour déterminer la température du coeur aussi pendant l'opération de montage.

3. Machine de montage de pneumatique suivant la revendication 1 ou 2,
**caractérisée en ce que** la sonde (4) de montage est constituée pour mesurer sans contact ou en touchant la surface du pneumatique.

4. Machine de montage de pneumatique suivant l'une quelconque des revendications précédentes,
**caractérisée en ce que** la sonde (4) de température est constituée en capteur infrarouge et est sensible dans le domaine médian de l'infrarouge.

5. Machine de montage de pneumatique suivant l'une des revendications précédentes,
**caractérisée en ce que** le dispositif de mesure de la température est constitué en un appareil pouvant être actionné à la main.

6. Machine de montage de pneumatique suivant l'une des revendications précédentes,
**caractérisée en ce que** la sonde (4) de température peut être orientée sur le bourrelet et/ou sur la paroi latérale du pneumatique que l'outil (8) de montage ou de démontage de la machine de montage de pneumatique attaque.

7. Machine de montage de pneumatique suivant la revendication 6,
**caractérisée en ce qu'**au moins la sonde (4) de température est montée mobile sur le bâti de la machine.

8. Machine de montage de pneumatique suivant l'une des revendications 1 à 7,
**caractérisée en ce que** la sonde (4) de température et le dispositif (7) d'indication forment une unité de construction.

9. Machine de montage de pneumatique suivant l'une des revendications précédentes,
**caractérisée en ce que** la machine (3) de montage de pneumatique ne peut démarrer l'opération de montage que si elle dispose d'une température déterminée du pneumatique qui est supérieure à une valeur de consigne définie, la valeur de consigne étant d'au moins 15°C.

10. Machine de montage de pneumatique suivant l'une des revendications précédentes,
**caractérisée en ce qu'**il est prévu au moins un dispositif de chauffage pour augmenter la température de coeur du pneumatique (2) lorsque la température mesurée est inférieure à une valeur de consigne, la température de chauffage étant au plus de 50°C.

11. Machine de montage de pneumatique suivant la revendication 10,
**caractérisée en ce que** le dispositif de chauffage a de l'eau comme fluide de transmission de la chaleur.

12. Machine de montage de pneumatique suivant l'une des revendications précédentes,
**caractérisée en ce qu'**il est prévu un dispositif d'orientation indiquant la direction de mesure de la sonde (4) de température, le dispositif d'orientation étant relié au dispositif (1) de mesure et ayant un laser.

13. Procédé de montage d'un pneumatique, dans lequel on tire le pneumatique sur une jante de roue lors de l'opération de montage ou on le retire d'une jante de roue, comprenant les stades supplémentaires :
a. On utilise une machine de montage de pneumatique suivant l'une des revendications 1 à 12 ayant un dispositif de mesure de la température,
b. On détermine la température de coeur du pneumatique par le dispositif de mesure de la température,
c. On compare la température réelle déterminée à une température de consigne,
d. On fait débuter l'opération de montage si la température réelle est égale à la température de consigne ou si elle est supérieure à la température de consigne.

14. Utilisation d'une machine de montage de pneumatique comprenant un dispositif de mesure de la température suivant l'une des revendications 1 à 12 ou d'un procédé suivant la revendication 13 pour le montage de pneumatiques Run Flat ou de pneumatiques UHP.
